Europäisches Patentamt

European Patent Office

Office européen des brevets

(19)

(11) Numéro de publication: **0 246 122**
**B1**

(12) **FASCICULE DE BREVET EUROPEEN**

(45) Date de publication du fascicule du brevet: **30.01.91**    (51) Int. Cl.⁵: **G 07 C 5/12,** G 01 P 1/07

(21) Numéro de dépôt: **87400831.1**

(22) Date de dépôt: **13.04.87**

(54) **Dispositif inscripteur pour enregistreurs à deux disques porte-diagramme.**

(30) Priorité: **14.04.86 FR 8605296**

(43) Date de publication de la demande:
**19.11.87 Bulletin 87/47**

(45) Mention de la délivrance du brevet:
**30.01.91 Bulletin 91/05**

(84) Etats contractants désignés:
**DE ES GB IT**

(56) Documents cités:
**EP-A-0 012 223**
**FR-A-2 164 323**
**FR-A-2 348 535**

(73) Titulaire: **JAEGER**
**2, rue Baudin**
**F-92303 Levallois-Perret (FR)**

(72) Inventeur: **Boucher, Alain**
**182, rue de Charenton**
**F-75012 Paris (FR)**
Inventeur: **Guillou, Jean-Pierre**
**165, rue Saint-Denis**
**F-92700 Colombes (FR)**

(74) Mandataire: **Martin, Jean-Jacques et al**
**Cabinet REGIMBEAU 26, Avenue Kléber**
**F-75116 Paris (FR)**

Courier Press, Leamington Spa, England.

## Description

L'invention concerne un dispositif inscripteur pour enregistreurs à deux disques porte-diagramme, tels que des enregistreurs de route, dénommés en général tachygraphes.

L'enregistrement simultané sur un deuxième disque porte-diagramme est rendu nécessaire dans certaines applications; en particulier, avec les enregistreurs de route, cela permet d'inscrire la variation d'un paramètre auxiliaire, par exemple le temps de travail et de repos d'un deuxième chauffeur, tandis que le premier disque porte-diagramme est concerné par l'enregistrement de plusieurs données d'utilisation (vitesse du véhicule, temps d'utilisation, distance parcourue), et éventuellement consommation ou régime moteur dans le cas où ce dernier disque est le seul utilisé.

Les disques porte-diagramme utilisés comme supports d'enregistrement doivent pouvoir être facilement placés dans l'enregistreur, et leur extraction doit être possible sans altérer l'enregistrement obtenu. Ces manipulations sont délicates dans le cas d'une utilisation de deux disques porte-diagramme disposés parallèlement et tournant en synchronisme; c'est pourquoi les dispositifs inscripteurs qui comportent des moyens de support et des organes scripteurs présentent en général une structure dont la simplicité est difficilement compatible avec la compacité demandée pour les boîtiers d'enregistreurs.

Selon une technique relativement ancienne, il était prévu de disposer deux disques porte-diagramme coaxialement, avec une entretoise de séparation, l'inscription entre les disques se faisant au moyen d'un système articulé, se déformant parallèlement aux disques, et fixé par un arbre latéral parallèle à l'axe du boîtier, au-delà de la périphérie desdits disques. Citons par exemple le brevet allemand N° 959 232 décrivant un tel dispositif inscripteur, certes robuste, mais encombrant et d'un maniement malaisé pour les opérations d'insertion et d'extraction des disques porte-diagramme. Un autre inconvénient de cette disposition réside dans l'imprécision de l'entraînement des deux disques porte-diagramme serrés aux deux extrémités de l'entretoise cylindrique d'espacement; or un glissement relatif provoque bien évidemment des erreurs d'interprétation des enregistrements, car la référence horaire n'est plus exactement repérée.

Cette technique a été améliorée depuis, car les exigences d'encombrement sont devenues plus strictes, de sorte qu'une fixation de supports d'organes scripteurs entre la surface intérieure du boîtier et le bord des disques porte-diagramme ne devenait plus possible. Il a été ainsi proposé, pour le montage de l'organe scripteur disposé entre les deux disques porte-diagramme, une assiette-support articulée sur le capot de l'enregistreur au voisinage de la charnière d'articulation de celui-ci.

Citons par exemple le brevet français N° 2 164 323 décrivant un tel dispositif inscripteur améliorant très sensiblement les techniques anciennes par sa compacité et son maniement relativement aisé: mise en place d'un premier disque porte-diagramme contre la face intérieure du capot articulé, insertion d'un anneau d'écartement, basculement de l'assiette-support en direction de ladite face intérieure, mise en place du deuxième disque porte-diagramme en passant sous la portion d'entraînement du bras support de l'organe scripteur. Cette structure est cependant complexe, et la présence de l'anneau d'écartement, même clipsable sur l'assiette-support, peut rendre imparfait l'entraînement des deux disques porte-diagramme, et donc introduire une certaine marge d'erreur dans l'interprétation des enregistrements obtenus. Par ailleurs, l'organe scripteur étant réalisé avec un bras oscillant autour d'un point fixe de l'assiette-support, le tracé de l'enregistrement correspondant se fait par passes curvilignes, ce qui le différencie des passes rectilignes réalisées classiquement par les autres organes scripteurs, et de plus le positionnement dudit organe scripteur est difficile à contrôler parfaitement en raison de la multiplicité des jeux introduits.

Pour compléter l'état de la technique, il convient de mentionner la demande de brevet européen N° 0 012 223, dans laquelle est décrit un système prévoyant un renversement global après pivotement pour l'assiette-support, ainsi que les brevets français N° 2 250 161, N° 2 300 342 et N° 2 340 585, dans lesquels le but recherché était d'ailleurs plutôt d'organiser les moyens d'entraînement en vue d'une rotation d'un disque porte-diagramme inversée par rapport à celle de l'autre disque porte-diagramme. On retrouve là encore les inconvénients déjà mentionnés en regard du brevet français N° 2 164 323. Citons enfin le brevet français N° 2 348 535 décrivant un système à platine escamotable.

L'invention a pour objet de proposer un dispositif inscripteur plus performant que les dispositifs précités, en particulier permettant un mode d'enregistrement précis au moyen d'un organe scripteur disposé entre deux disques porte-diagramme.

Un autre objet de l'invention est de proposer un dispositif de structure simple, permettant un centrage et un entraînement améliorés pour les deux disques porte-diagramme, avec un encombrement minimal en épaisseur.

Un autre objet de l'invention est de proposer un dispositif apte à être utilisé avec des dispositifs optionnels d'inscription et/ou de contrôle de présence du disque.

Il s'agit selon l'invention, d'un dispositif inscripteur pour enregistreur à deux disques-porte-diagramme, ledit enregistreur comprenant un boîtier, une porte articulée sur ledit boîtier et un mécanisme d'entraînement des disques porte-diagramme, le dispositif inscripteur comportant des moyens de support et des organes scripteurs permettant une inscription simultanée des deux disques porte-diagramme, caractérisé par le fait qu'il comporte une table fixe montée sur la porte à distance de la face intérieure de celle-ci, et une table mobile montée coulissante sur ladite table fixe, ladite table mobile comportant d'une part une portion inférieure passant entre la table fixe et la face intérieure de la porte, et d'autre part une portion supérieure s'y raccordant, rabattue au-dessus de la table fixe à faible distance de celle-ci, que la liaison coulissante est prévue entre ladite portion inférieure et ladite table fixe de façon à permettre un dégagement au moins partiel de la portion supérieure pour disposer un disque porte-diagramme sur la table fixe, et qu'un organe scripteur est fixé sur ladite portion supérieure sur la face de celle-ci qui est tournée vers la table fixe, l'autre face servant d'appui à l'autre disque porte-diagramme.

En option, pour une structure simple, la table fixe a sensiblement la forme d'une demi-couronne.

Avantageusement, la table fixe porte un axe sur lequel coulisse librement la portion inférieure de la table mobile, dans une direction sensiblement parallèle à la face intérieure de la porte, et l'axe de coulissement est sensiblement perpendiculaire à l'axe d'articulation de la porte.

Pour une manipulation aisée et une meilleure fiabilité de l'enregistrement réalisé par l'organe scripteur disposé entre les disques porte-diagramme, des moyens élastiques sont prévus pour rappeler constamment la table mobile en direction de l'axe d'articulation de la porte, et la portion inférieure de la table mobile présente une patte dont l'extrémité rabattue dépasse du bord de la table fixe, ladite patte servant à la fois d'organe de prise de mouvement pour déplacer l'organe scripteur porté par la table mobile, lorsque la porte est fermée, et d'organe de préhension pour dégager manuellement ladite table mobile en la faisant coulisser.

Dans ce cas, il est intéressant que la patte passe sous une rampe au niveau du bord de la table fixe, de façon que le dégagement de la table mobile produise simultanément un léger soulèvement de celle-ci par rapport à la table fixe; par exemple, la rampe présente une première portion droite, correspondant au coulissement d'inscription par l'organe scripteur, et une deuxième portion droite en décrochement, correspondant au coulissement de dégagement de la table mobile.

Avantageusement, la portion supérieure de la table mobile a sensiblement la forme d'un demi-segment de cercle dont la largeur permet le contact naturel des deux disques porte-diagramme dans leur zone centrale d'entraînement; en particulier, l'organe scripteur est disposé entre les disques porte-diagramme de façon à permettre un enregistrement ayant la même référence angulaire que ceux obtenus par le ou les autres organes scripteurs montés de façon connue en soi dans le boîtier de l'enregistreur.

Selon une autre caractéristique intéressante, la portion supérieure de la table mobile présente une fente traversante parallèle à la direction de coulissement, permettant le passage d'un organe contrôlant la présence du disque porte-diagramme passant sur ladite table mobile. De la même façon, il est avantageux que la table soit munie d'une fente traversante permettant le passage d'un autre organe scripteur pour la face opposée du disque porte-diagramme concerné ou d'un organe contrôlant la présence dudit disque porte-diagramme.

D'autres caractéristiques et avantages de l'invention apparaîtront plus clairement à la lumière de la description qui va suivre et du dessin annexé, concernant un mode de réalisation préférentiel d'un dispositif inscripteur conforme à l'invention, en référence aux figures où.

la figure 1 montre un enregistreur dont la porte articulée est ouverte, équipé d'un dispositif inscripteur conforme à l'invention, les deux disques porte-diagramme destinés à être reçus n'étant pas représentés pour faciliter la clarté de la figure;

la figure 2 est une vue de dessus partielle du dispositif inscripteur de la figure 1, montrant de façon plus détaillée les différents organes le constituant;

la figure 3 est une vue en élévation de la table mobile seule;

les figures 4 et 5 sont des vues de côté de cette table mobile, respectivement selon les flèches A et B de la figure 1;

la figure 6 est une coupe de détail selon VI—VI de la figure 1, illustrant la position de l'organe scripteur par rapport aux disques porte-diagramme;

la figure 7 illustre en perspective un détail concernant les moyens transmettant le mouvement à l'organe scripteur déjà représenté aux figures 2 et 3;

les figures 8a à 8c montrent schématiquement comment est réalisée l'insertion des deux disques porte-diagramme, l'extraction desdits disques se faisant naturellement avec les mêmes opérations effectuées dans un ordre inverse.

Le dispositif inscripteur qui va être décrit est destiné à équiper un enregistreur de route à deux disques porte-diagramme, communément appelé tachygraphe, mais il va de soi que l'invention n'est pas limitée à un tel type d'enregistreur.

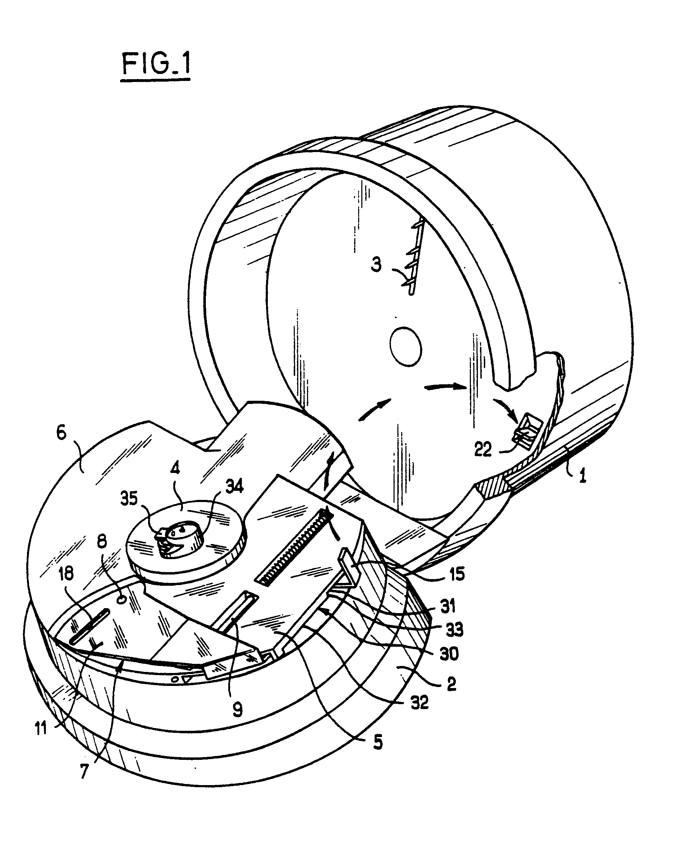

Ainsi qu'illustré en figure 1, l'enregistreur comporte un boîtier 1, une porte 2 articulée sur ledit boîtier, et un mécanisme d'entraînement (non représenté) des disques porte-diagramme. L'enregistreur de route représenté peut recevoir deux disques porte-diagramme, c'est-à-dire un premier disque servant aux supports d'enregistrement par des organes scripteurs 3 (indiquant la vitesse du véhicule, le temps d'utilisation, la distance parcourue, et à titre d'option éventuelle la consommation ou le régime moteur), et un deuxième disque porte-diagramme servant à inscrire la variation d'un paramètre auxiliaire, par exemple le temps de travail et de repos d'un deuxième chauffeur. Dans la suite de la description, ces deux disques porte-diagramme seront dénommés respectivement premier et deuxième disques pour la clarté de l'exposé, bien que le disque dénommé deuxième disque soit en fait, comme on le verra plus loin, inséré en premier dans l'enregistreur.

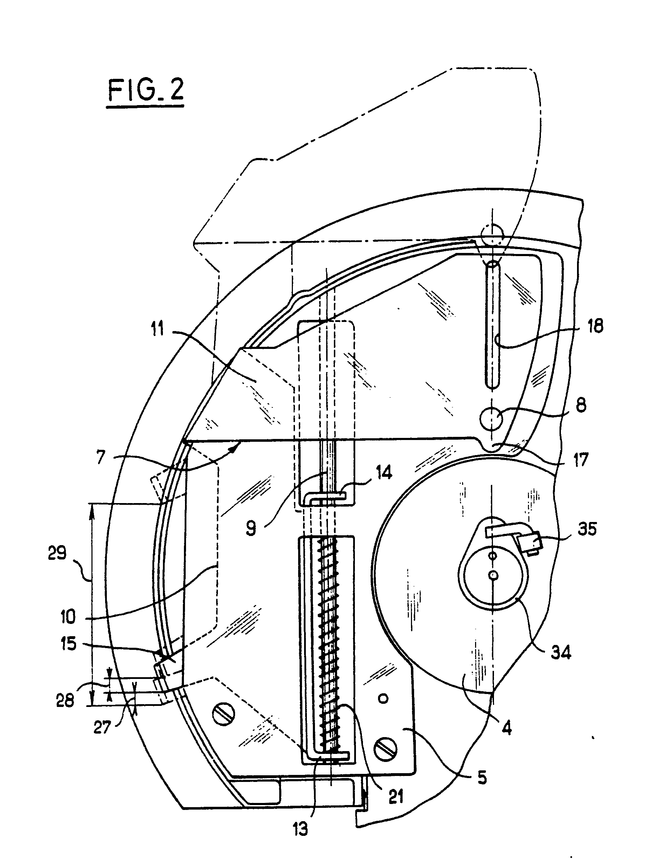

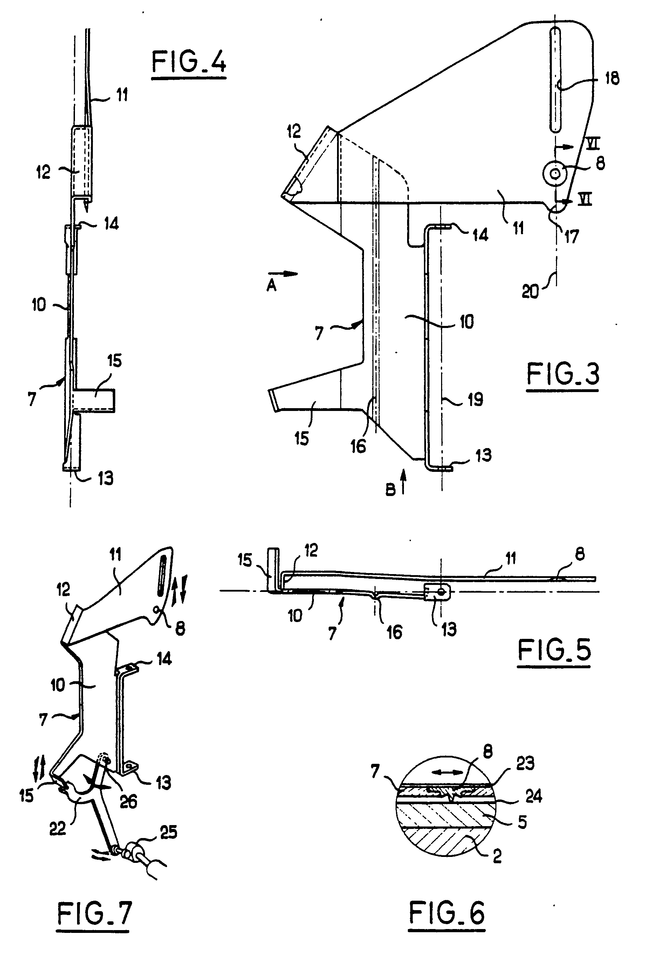

Les deux disques montés superposés de manière isoaxique sur une couronne support 4, sont écartés l'un de l'autre seulement sur un secteur angulaire de ceux-ci, correspondant à l'enregistrement inter-disques. Il est ainsi prévu une table fixe 5 montée sur la porte 2 à distance de la face intérieure 6 de celle-ci, et une table mobile 7 montée coulissante sur ladite table fixe, ladite table mobile comportant d'une part une portion inférieure passant entre la table fixe 5 et la face intérieure 6 de la porte, et d'autre part une portion supérieure s'y raccordant, rabattue au-dessus de la table fixe 5 à faible distance de celle-ci, la structure de la table mobile coulissante 7 étant mieux visible sur la figure 2, et surtout sur les figures 3 à 5 où celle-ci est représentée toute seule. Une liaison coulissante est ainsi prévue entre la portion inférieure de la table mobile 7 et la table fixe 5 de façon à permettre un dégagement au moins partiel de la portion supérieure de ladite table mobile 7 pour disposer un disque porte-diagramme sur la table fixe 5; de plus, un organe scripteur 8 est fixé sur la portion supérieure de la table mobile 7, sur la face de celle-ci qui est tournée vers la table fixe 5, l'autre face servant d'appui à l'autre disque porte-diagramme.

La liaison coulissante entre table mobile 7 et table fixe 5 constitue une caractéristique essentielle de la présente invention, ce coulissement concernant à la fois l'inscription du deuxième disque par l'organe scripteur 8 porté par la table mobile 7, et le dégagement au moins partiel de la portion supérieure de la table mobile 7 pour faciliter la mise en place du deuxième disque porte-diagramme, l'amplitude de ce dernier coulissement étant naturellement aussi grande que possible pour permettre un dégagement optimal de ladite table mobile.

La table fixe pourrait représenter une surélévation globale de la face intérieure 6 de la porte, mais il est plus avantageux de prévoir, ainsi que cela a été représenté aux figures 1 et 2, une table fixe 5 sensiblement en forme de demi-couronne, de façon à définir un espace intermédiaire permettant de loger la portion inférieure de la table mobile 7. La table fixe porte un axe 9 permettant le coulissement de la table mobile 7, dans une direction sensiblement parallèle à la face intérieure 6 de la porte. Ainsi que cela a été représenté, l'axe de coulissement 9 est de préférence essentiellement perpendiculaire à l'axe d'articulation de la porte, ce qui présente de nombreux avantages techniques qui seront mentionnés plus loin avec la description du fonctionnement.

Les figures 3 à 5 illustrent clairement la structure particulière qui a été choisie pour réaliser la table mobile 7. Cette table mobile est essentiellement constituée par une portion inférieure 10 et une portion supérieure 11 s'y raccordant par l'intermédiaire d'un petit bord 12, de façon à pouvoir être rabattu au-dessus du niveau de la portion inférieure 10. La portion inférieure 10 présente deux portées 13, 14 pouvant recevoir l'axe de coulissement 9, et, de l'autre côté, une patte 15 dont l'extrémité est repliée sensiblement à 90°. La portion inférieure 10 peut présenter un léger décrochement par une pliure 16, mais reste dans l'ensemble essentiellement plane, de même que la portion supérieure 11 qui présente ici un léger pliage d'environ 1° pour ne pas blesser le premier disque porte-diagramme. Il va de soi que la portion supérieure 11 peut présenter une forme relativement variable, mais la forme adoptée ici selon un demi-segment de cercle dont la largeur permet le contact naturel des deux disques porte-diagramme dans leur zone centrale d'entraînement, présente de nombreux avantages. Au voisinage de son bord libre, la portion supérieure 11 de la table mobile porte l'organe scripteur 8 dont la pointe est tournée vers la face intérieure de la porte, et, de part et d'autre de cet organe scripteur, un becquet 17 d'une part, indispensable pour l'appui du dernier organe scripteur 3 (indiquant généralement la distance parcourue), et d'autre part une fente traversante 18 parallèle à la direction de coulissement 19, cette fente permettant le passage d'un organe contrôlant la présence du disque porte-diagramme passant sur la table mobile 7. On observera que la direction de coulissement 19 (figure 3), et la direction 20 passant au niveau du becquet 17, de l'organe scripteur 8, et de la fente traversante 18, sont parallèles, ce qui permet de conférer à l'enregistrement réalisé par l'organe scripteur 8 la même référence angulaire que pour ceux obtenus par le ou les autres organes scripteurs 3 montés de façon connue en soi dans le boîtier de l'enregistreur.

Pour une manipulation aisée et une meilleure fiabilité de l'enregistrement réalisé par l'organe scripteur 8, des moyens élastiques sont prévus pour rappeler constamment la table mobile 7 en direction de l'axe d'articulation de la porte 2. C'est ainsi que l'on a prévu un ressort 21 disposé sur l'axe 9 entre la portée 13 de la table mobile 7 et une portée de la table fixe 5. Le ressort 21 tend ainsi à ramener la table mobile 7 en position de butée contre l'une des portées 13, 14 de la table mobile.

L'organe scripteur 8 fixé sur la table mobile 7 peut ainsi se déplacer en réponse à l'action d'un organe de prise de mouvement 22 du boîtier (figure I),contre lequel est appliquée l'extrémité relevée de la patte 15 de ladite table mobile. La prise de mouvement 22 transmet ainsi un mouvement alternatif rectiligne à la pointe de l'organe scripteur 8: ceci permet d'obtenir un tracé d'enregistrement réalisé par passes rectilignes, donc de façon analogue aux tracés d'enregistrement obtenus avec les autres organes scripteurs, de sorte que l'on dispose d'un même type d'inscription sur les disques porte-diagramme pour tous les organes scripteurs de l'enregistreur de route. Le détail de la figure 6 montre en coupe la position relative d'ensemble au voisinage de l'organe scripteur 8: on trouve ainsi successivement le premier disque porte-diagramme 23, la table mobile 7 avec l'organe scripteur 8, le deuxième disque porte-diagramme 24, la table fixe 5 et enfin la porte 2. A toutes fins utiles, la figure 7 illustre schématiquement la transmission du mouvement: à l'intérieur du boîtier, une came 25 transmet un mouvement d'oscillation à un bras fixé en 26 et terminé par une patte 22, ce mouvement étant communiqué directement par la patte 15 à l'organe scripteur 8, sous forme d'un mouvement alternatif de translation dans une direction parallèle à la direction du coulissement de la table mobile 7. C'est précisément cette disposition qui permet de réaliser avec l'organe scripteur 8 un enregistrement ayant la même référence angulaire que ceux obtenus par les autres organes scripteurs 3.

A la figure 2, la table mobile 7 est représentée en trait continu dans la position qu'elle occupe lorsque la porte est fermée, position prête à l'enregistrement; il est avantageux de faire en sorte que cette position ne soit pas exactement la position de butée arrière, autrement dit que le contact entre l'organe de prise de mouvement 22 et la patte 15 de la table mobile lors de la fermeture de la porte se traduise par un léger déplacement de la table mobile 7, cette course de sécurité garantissant un appui réel sur la prise de mouvement avec une référence constante pour l'enregistrement (course de sécurité 27). A partir de cette position de référence, l'amplitude maximale d'oscillation à partir de la prise de mouvement 22 correspond à une course d'inscription 28 choisie en général de 0,8 ou de 1,6 mm; si l'on désire dégager au maximum la table mobile 7, il suffit d'agir manuellement sur la patte 15 pour faire coulisser ladite table, selon une course de dégagement 29, amenant la portion supérieure 11 dans une position illustrée en traits mixtes. La patte 15 de la table mobile sert ainsi à la fois d'organe de prise de mouvement pour déplacer l'organe scripteur 8, lorsque la porte est fermée, et d'organe de préhension pour dégager manuellement ladite table mobile en la faisant coulisser, la porte étant alors naturellement ouverte.

Selon une autre caractéristique avantageuse illustrée à la figure 1, la patte 15 de la table mobile 7 passe sous une rampe 30 au niveau du bord de la table fixe 5, de façon que le dégagement de ladite table mobile produise simultanément un léger soulèvement de celle-ci par rapport à la table fixe 5. Ici, la rampe 30 présente une première portion droite 31 correspondant au coulissement d'inscription par l'organe scripteur 8, et une deuxième portion droite 32 en décrochement (créneau 33) correspondant au coulissement de dégagement de la table mobile 7. On pourrait naturellement prévoir une lame ressort formant une rampe élastique pour la patte 15, de façon que celle-ci soit en permanence correctement en appui contre la rampe 31; il est apparu cependant que la pression exercée par les ressorts des organes scripteurs 3 était le plus souvent suffisante pour assurer ce maintien.

Il est important de noter que la faible épaisseur de la portion supérieure de la table mobile (environ huit dixièmes de millimètre lorsqu'on utilise une plaque métallique en acier inox ou nickelée, auxquels s'ajoutent trois dixièmes de millimètre pour le dépassement de la pointe de l'organe scripteur) n'implique aucune perturbation dans le contact naturel des deux disques-porte-diagramme dans la zone centrale d'entraînement, les deux disques étant en fait pincés ensemble: ainsi, lorsque les deux disques sont disposés sur l'arbre d'entraînement 34, la patte de fixation 35 maintient lesdits disques contre la couronne support 4, ce qui permet d'avoir un support de centrage et de fixation commun pour les deux disques, sans entretoise, avec un entraînement tout à fait satisfaisant. L'épaisseur de la table mobile est tellement faible que l'on est assuré d'éviter toute distorsion du premier disque au franchissement de ladite table.

Il est par ailleurs intéressant de prévoir que la table fixe 5 passe complètement en dessous de la portion supérieure 11 de la table mobile 7, ainsi qu'illustré aux figures 1 et 2. Cette portion de la table fixe 5 peut en outre être munie d'une fente traversante (non représentée) permettant le passage d'un autre organe scripteur pour la face opposée du deuxième disque porte-diagramme ou d'un organe contrôlant la présence dudit disque; ceci permet en particulier une option intéressante, à savoir un enregistrement de compte-toursen face arrière du deuxième disque au moyen d'un organe scripteur associé.

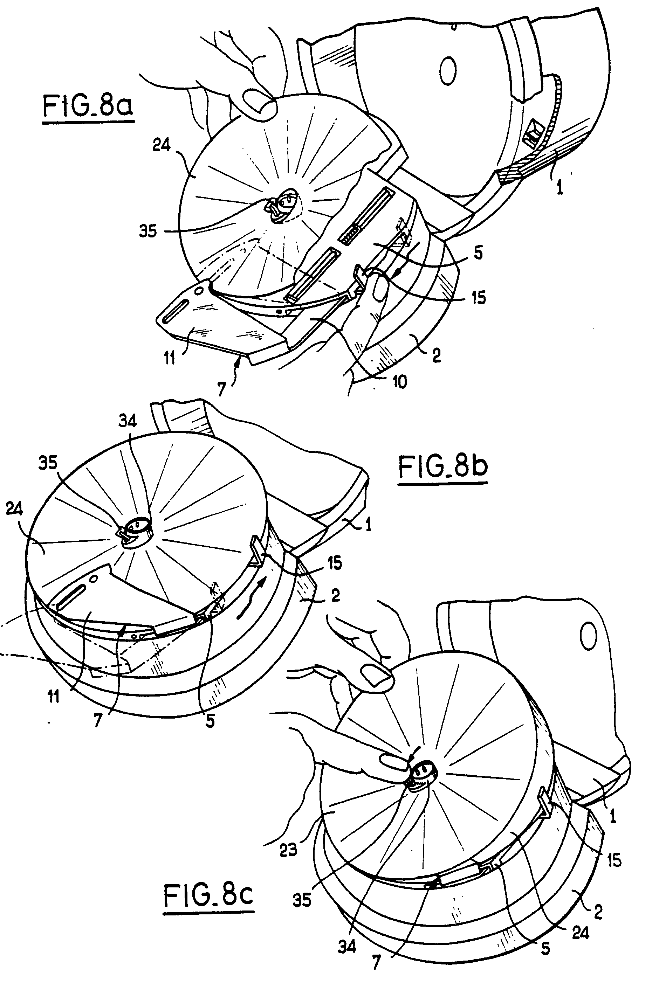

Les opérations de manipulation du dispositif inscripteur de l'invention ne poseront pour l'opérateur aucun problème particulier. Les figures 8a à 8c montrent schématiquement comment est réalisée l'insertion des deux disques porte-diagramme (l'extraction se faisant dans un ordre inverse):

figure 8a, la patte 35 est mise en position haute, et l'opérateur agit manuellement sur la patte 15 de façon à dégager au maximum la portion supérieure 11 de la table mobile 7, et ainsi pouvoir aisément insérer le deuxième disque 24 (disque deuxième chauffeur) en le disposant sur la table fixe 5; la rampe de soulèvement décrite précédemment permet de dégager le becquet de la portion supérieure au cas où celui-ci constituerait une gêne pour l'insertion du disque sous la portion supérieure 11 de la table mobile.

figure 8b, l'opérateur relâche la patte 15 de la table mobile, de sorte que celle-ci retourne instantanément dans sa position rétractée sous l'action du ressort 21, la portion supérieure 11 de ladite table mobile enjambant alors le disque porte-diagramme 24; il faudra néanmoins veiller à ce que le disque soit convenablement positionné et parfaitement centré sur la couronne support avant de relâcher la patte 15, de façon à éviter tout endommagement dudit disque par le recul de la table mobile et/ou la pointe de l'organe scripteur portée par celle-ci.

figure 8c, l'opérateur peut alors disposer le premier disque 23 (disque premier chauffeur), venant se superposer directement sur le deuxième disque 24 dans toute la zone extérieure à la portion supérieure 11 de la table mobile, et en particulier dans la zone centrale d'entraînement; l'opérateur peut alors rabattre la patte 35, et les deux disques 23, 24 sont alors parfaitement centrés et fixés, en position prête à l'enregistrement après fermeture de la porte.

Le dispositif inscripteur de l'invention permet ainsi un mode d'enregistrement particulièrement précis au moyen d'un organe scripteur disposé entre deux disques porte-diagramme, lesquels sont parfaitement fixés et centrés sans risque d'un glissement relatif qui introduirait une erreur dans l'interprétation des enregistrements.

Bien que le dispositif inscripteur de l'invention soit plus particulièrement destiné à une utilisation avec deux disques porte-diagramme, il est à noter qu'un enregistrement avec un seul disque est également possible: il suffit alors de poser ce disque directement sur la portion supérieure de la table mobile et sur la table fixe, comme s'il s'agissait d'un support naturel que représenterait la face intérieure de la porte articulée, sans qu'il soit nécessaire de démonter ladite table mobile et la table fixe.

## Revendications

1. Dispositif inscripteur pour enregistreur à deux disques porte-diagramme, ledit enregistreur comprenant un boîtier, une porte articulée sur ledit boîtier et un mécanisme d'entraînement des disques porte-diagramme, le dispositif inscripteur comportant des moyens de support et des organes scripteurs permettant une inscription simultanée des deux disques porte-diagramme, caractérisé par le fait qu'il comporte une table fixe (5) montée sur la porte à distance de la face intérieure (6) de celle-ci, et une table mobile (7) montée coulissante sur ladite table fixe, ladite table mobile comportant d'une part une portion inférieure (10) passant entre la table fixe (5) et la face intérieure (6) de la porte, et d'autre part une portion supérieure (11) s'y raccordant, rabattue au-dessus de la table fixe (5) à faible distance de celle-ci, que la liaison coulissante est prévue entre ladite portion inférieure et ladite table fixe de façon à permettre un dégagement au moins partiel de la portion supérieure pour disposer un disque porte-diagramme sur la table fixe, et qu'un organe scripteur (8) est fixé sur ladite portion supérieure (11) sur la face de celle-ci qui est tournée vers la table fixe (5), l'autre face servant d'appui à l'autre disque porte-diagramme.

2. Dispositif inscripteur selon la revendication 1, caractérisé par le fait que la table fixe (5) a sensiblement la forme d'une demi-couronne.

3. Dispositif inscripteur selon l'une des revendications 1 et 2, caractérisé par le fait que la table fixe (5) porte un axe (9) sur lequel coulisse librement la portion inférieure de la table mobile, dans une direction sensiblement parallèle à la face intérieure de la porte.

4. Dispositif inscripteur selon la revendication 3, caractérisé par le fait que l'axe de coulissement (9) est sensiblement perpendiculaire à l'axe d'articulation de la porte.

5. Dispositif inscripteur selon la revendication 4, caractérisé par le fait que des moyens élastiques (21) sont prévus pour rappeler constamment la table mobile (7) en direction de l'axe d'articulation de la porte.

6. Dispositif inscripteur selon l'une des revendications 1 à 5, caractérisé par le fait que la portion inférieure de la table mobile présente une patte (15) dont l'extrémité rabattue dépasse du bord de la table fixe (5), ladite patte servant à la fois d'organe de prise de mouvement pour déplacer l'organe scripteur porté par la table mobile (7), lorsque la porte (2) est fermée, et d'organe de préhension pour dégager manuellement ladite table mobile en la faisant coulisser.

7. Dispositif inscripteur selon la revendication 6, caractérisé par le fait que la patte (15) passe sous une rampe (30) au niveau du bord de la table fixe (5), de façon que le dégagement de la table mobile (7) produise simultanément un léger soulèvement de celle-ci par rapport à la table fixe (5).

8. Dispositif inscripteur selon la revendication 7, caractérisé par le fait que la rampe (30) présente une première portion droite (31), correspondant au coulissement d'inscription par l'organe scripteur (8), et une deuxième portion droite (32),en décrochement correspondant au coulissement de dégagement de la table mobile (7).

9. Dispositif inscripteur selon l'une des revendications 1 à 8, caractérisé par le fait que la portion supérieure (11) de la table mobile (7) a sensiblement la forme d'un demi-segment de cercle dont la largeur permet le contact naturel des deux disques porte-diagramme dans leur zone centrale d'entraînement.

10. Dispositif inscripteur selon la revendication 9, caractérisé par le fait que l'organe scripteur (8) est disposé entre les disques porte-diagramme de façon à permettre un enregistrement ayant la même référence angulaire que ceux obtenus par le ou les autres organes scripteurs (3) montés de façon connue en soi dans le boîtier de l'enregistreur.

11. Dispositif inscripteur selon l'une des revendications 9 et 10, caractérisé par le fait que la portion supérieure (11) de la table mobile (7) présente une fente traversante (18) parallèle à la direction de coulissement, permettant le passage d'un organe contrôlant la présence du disque porte-diagramme passant sur ladite table mobile.

12. Dispositif inscripteur selon l'une des revendications 1 à 11, caractérisé par le fait que la table fixe (5) est munie d'une fente traversante permettant le passage d'un autre organe scripteur pour la face opposée du disque porte-diagramme concerné ou d'un organe contrôlant la présence dudit disque porte-diagramme.

## Patentansprüche

1. Schreibvorrichtung für ein Registriergerät mit zwei Diagrammscheiben, wobei das Registriergerät ein Gehäuse, eine schwenkbare Abdeckung auf dem Gehäuse und einen Antriebsmechanismus für die Diagrammscheiben aufweist und die Schreibvorrichtung Trägereinrichtungen und Schreibelemente umfaßt, die eine gleichzeitige Beschriftung zweier Diagrammscheiben erlauben, dadurch gekennzeichnet, daß sie einen feststehenden Tisch (5), der auf der Abdeckung im Abstand von ihrer Innenfläche (6) angebracht ist, und einen beweglichen Tisch (7), der gleitbar auf dem feststehenden Tisch angebracht ist, umfaßt, wobei der bewegliche Tisch einerseits einen nach unten versetzten Abschnitt (10), der zwischen dem feststehenden Tisch (5) und der Innenfläche (6) der Abdeckung verläuft, und andrerseits einen sich daran anschließenden nach oben versetzten Abschnitt (11), oberhalb des feststehenden Tisches (5) in geringem Abstand dazu umgelegt, aufweist, daß die Gleitverbindung zwischen dem nach unten versetzten Abschnitt und dem feststehenden Tisch so vorgesehen ist, daß wenigstens teilweise ein Ausklinken des nach oben versetzten Abschnittes möglich ist, um auf dem feststehenden Tisch eine Diagrammscheibe anzuordnen, und daß ein Schreibelement (8) auf dem nach oben versetzten Abschnitt (11) auf dessen Fläche angeordnet ist, das auf den feststehenden Tisch (5) gerichtet ist, wobei die andere Fläche als Anschlag für die andere Diagrammscheibe dient.

2. Schreibvorrichtung nach Anspruch 1, dadurch gekennzeichnet, daß der feststehende Tisch (5) im wesentlichen halbkronenförmig ist.

3. Schreibvorrichtung nach Anspruch 1 oder 2, dadurch gekennzeichnet, daß der feststehende Tisch (5) eine Achse (9) trägt, auf der der nach unten versetzte Abschnitt des beweglichen Tisches in einer Richtung frei gleitet, die im wesentlichen parallel zur Innenfläche der Abdekkung ist.

4. Schreibvorrichtung nach Anspruch 3, dadurch gekennzeichnet, daß die Gleitachse (9) im wesentlichen senkrecht zur Schwenkachse der Abdeckung liegt.

5. Schreibvorrichtung nach Anspruch 4, dadurch gekennzeichnet, daß eine elastische Einrichtung (21) zum ständigen Rückstellen des beweglichen Tisches (7) in die Richtung der Schwenkachse der Abdeckung vorgesehen ist.

6. Schreibvorrichtung nach einem der Ansprüche 1 bis 5, dadurch gekennzeichnet, daß der nach unten versetzte Abschnitt des beweglichen Tisches eine Klaue (15) aufweist, deren umgeschlagenes äußeres Ende über die Kante des feststehenden Tisches (5) ragt, wobei die Klaue sowohl als Bewegungsmitnehmer zum Verlagern des vom beweglichen Tisch (7) getragenen Schreibelementes, wenn die Abdeckung (2) abgeschlossen ist, als auch als Greifer zum manuellen Freisetzen des beweglichen Tisches dient, indem dieser zum Gleiten gebracht wird.

7. Schreibvorrichtung nach Anspruch 6, dadurch gekennzeichnet, daß die Klaue (15) an der Kante des feststehenden Tisches unter eine Rampe (30) tritt, so daß das Freisetzen des beweglichen Tisches gleichzeitig dessen leichtes Anheben in bezug auf den feststehenden Tisch (5) bewirkt.

8. Schreibvorrichtung nach Anspruch 7, dadurch gekennzeichnet, daß die Rampe (30) einen ersten geraden Abschnitt (31) entsprechend dem Gleitweg des Schreibelementes (8) bei der Schreibbewegung und einen zweiten geraden Abschnitt (32), der entsprechend dem Gleitweg beim Freisetzen des beweglichen Tisches (7) seitenversetzt ist, aufweist.

9. Schreibvorrichtung nach einem der Ansprüche 1 bis 8, dadurch gekennzeichnet, daß der nach oben versetzte Abschnitt (11) des beweglichen Tisches (7) im wesentlichen die Form eines Halbkreisabschnittes hat, dessen Größe den natürlichen Kontakt der zwei Diagrammscheiben in ihren zentralen Antriebsbereichen ermöglicht.

10. Schreibvorrichtung nach Anspruch 9, dadurch gekennzeichnet, daß das Schreibelement (8) zwischen den Diagrammscheiben so angeordnet ist, daß eine Aufzeichnung mit derselben Winkelreferenz möglich ist, die man mit dem oder den anderen, auf bekannte Weise im Registriergehäuse angebrachten Schreibelement(en) (3) erhält.

11. Schreibvorrichtung nach Anspruch 9 oder 10, dadurch gekennzeichnet, daß der nach oben versetzte Abschnitt (11) des beweglichen Tisches (7) einen durchgehenden Schlitz (18) parallel zur Gleitrichtung aufweist, der den Durchlaß eines Elementes, das das Vorhandensein der auf dem beweglichen Tisch laufenden Diagrammscheibe überwacht, ermöglicht.

12. Schreibvorrichtung nach einem der Ansprüche 1 bis 11, dadurch gekennzeichnet, daß der feststehende Tisch (5) mit einem durchgehenden Sohlitz versehen ist, der den Durchlaß eines anderen Schreibelementes für die gegenüberliegende Fläche der betreffenden Diagrammscheibe oder eines Elementes, das das Vorhandensein der Diagrammscheibe überwacht, ermöglicht.

**Claims**

1. Inscription device for a recorder with two diagram discs, the said recorder comprising a housing, a door articulated on the said housing and a mechanism for driving the diagram discs, the inscription device having supporting means and writing members allowing a simultaneous inscription of the two diagram discs, characterized in that it has a stationary table (5) mounted on the door at a distance from the inner face (6) of the latter and a movable table (7) mounted slidably on the said stationary table, the said movable table comprising, on the one hand, a lower portion (10) passing between the stationary table (5) and the inner face (6) of the door and, on the other hand, an upper portion (11) connected to it and turned down over the stationary table (5) at a short distance from this, in that the sliding connection is made between the said lower portion and the said stationary table so as to allow an at least partial removal of the upper portion in order to arrange a diagram disc on the stationary table, and in that a writing member (8) is fastened to the said upper portion (11) on the face of the latter confronting the stationary table (5), the other face serving as a support for the other diagram disc.

2. Inscription device according to Claim 1, characterized in that the stationary table (5) has substantially the form of a half-ring.

3. Inscription device according to one of Claims 1 and 2, characterized in that the stationary table (5) carries an axle (9), on which the lower portion of the movable table slides freely in a direction substantially parallel to the inner face of the door.

4. Inscription device according to Claim 3, characterized in that the sliding axle (9) is substantially perpendicular to the axis of articulation of the door.

5. Inscription device according to Claim 4, characterized in that elastic means (21) are provided for returning the movable table (7) constantly in the direction of the axis of articulation of the door.

6. Inscription device according to one of Claims 1 to 5, characterized in that the lower portion of the movable table has a tab (15), the turned-up end of which projects beyond the edge of the stationary table (5), the said tab serving both as a movement take-up member for displacing the writing member carried by the movable table (7) when the door (2) is closed and as a grasping member for removing the said movable table manually by causing it to slide.

7. Inscription device according to Claim 6, characterized in that the tab (15) passes under a ramp (30) in the region of the edge of the stationary table (5), in such a way that the removal of the movable table (7) at the same time causes a slight lifting of the latter in relation to the stationary table (5).

8. Inscription device according to Claim 7, characterized in that the ramp (30) has a first straight portion (31) corresponding to the sliding for inscription by the writing member (8) and a second straight portion (32) offset and corresponding to the sliding for the removal of the movable table (7).

9. Inscription device according to one of Claims 1 to 8, characterized in that the upper portion (11) of the movable table (7) has substantially the form of a half-segment of a circle, the width of which allows a natural contact of the two diagram discs in their central driving zone.

10. Inscription device according to Claim 9, characterized in that the writing member (8) is arranged between the diagram discs in such a way as to allow a recording having the same angular reference as those obtained by the other writing member or writing members (3) mounted in a way known per se in the housing of the recorder.

11. Inscription device according to one of Claims 9 and 10, characterized in that the upper portion (11) of the movable table (7) has a through slot (18) parallel to the sliding direction, allowing the passage of a member checking the presence of the diagram disc travelling on the said movable table.

12. Inscription device according to one of Claims 1 to 11, characterized in that the stationary table (5) is equipped with a through slot allowing the passage of another writing member for the opposite face of the particular diagram disc or of a member checking the presence of the said diagram disc.

## FIG.1

# FIG. 2

FIG.4

FIG.3

FIG.5

FIG.7

FIG.6

FIG.8a

FIG.8b

FIG.8c

4